# NEUE EUROPÄISCHE PATENTSCHRIFT

(11) **EP 3 292 031 B2**
(45) Veröffentlichungstag und Bekanntmachung des Hinweises auf die Entscheidung über den Einspruch: **22.06.2022**
(45) Hinweis auf die Patenterteilung: 27.02.2019
(21) Anmeldenummer: 16720347.0
(22) Anmeldetag: 29.04.2016
(51) Int. Cl.: B60T 15/04

(54) **VERFAHREN ZUM BETRIEB EINES PARKBREMSSYSTEMS FÜR NUTZFAHRZEUGE, SOWIE VORRICHTUNG HIERZU**
METHOD FOR OPERATING A PARKING BRAKE AND PARKING BRAKE
MÉTHODE POUR OPÉRER UN FREIN DE STATIONNEMENT ET FREIN DE STATIONNEMENT

(30) Priorität: 04.05.2015 DE 102015106843
(43) Veröffentlichungstag der Anmeldung: 14.03.2018
(73) Patentinhaber: KNORR-BREMSE Systeme für Nutzfahrzeuge GmbH, 80809 München (DE)
(72) Erfinder: BALOGH, Levente, H-6000 Kecskemét (HU); BORDACS, Zoltan, H-1224 Budapest (HU); SIMON, Zoltan, H-3000 Hatvan (HU)
(74) Vertreter: Maiwald Patent- und Rechtsanwaltsgesellschaft mbH
(86) Internationale Anmeldenummer: PCT/EP2016/000697
(87) Internationale Veröffentlichungsnummer: WO 2016/177458

(56) Entgegenhaltungen:
- EP-A1- 2 146 882
- DE-A1-102005 024 120
- DE-A1-102006 055 569
- DE-A1-102007 016 335
- DE-A1-102011 053 529
- DE-B3-102008 007 877
- US-A1- 2003 217 899

## Beschreibung

Die Erfindung betrifft ein Verfahren zum Betrieb eines druckluftbetriebenen Parkbremssystems eines Nutzfahrzeugs, mit einer Parkbremseinrichtung, mittels derer Druckluft in einen Federspeicherzylinder eingespeist und dieser entlüftet wird, wodurch eine zugeordnete Bremse regelbar gelöst und angelegt wird, sowie mit einer Notlöseeinrichtung zur Drucklufteinspeisung in den Federspeicherzylinder während einer Fehlfunktion der Parkbremseinrichtung. Außerdem betrifft die Erfindung ein entsprechendes Parkbremssystem und Fahrzeug.

Das Einsatzgebiet der Erfindung erstreckt sich auf Bremssysteme, insbesondere Parkbremssysteme von Nutzfahrzeugen, wie beispielsweise Lastkraftwagen, bestehend aus Zugfahrzeug und Anhänger, oder Bussen oder Trucks ohne Anhänger.

Solche Nutzfahrzeuge verfügen über Parkbremsen, die über Feststellbremsen realisiert werden. Dabei wird eine Bremse durch Federkraft angelegt und durch Druckmittel, beispielsweise durch Druckluft wieder gelöst. Dies bewirkt, dass bei Fehlfunktionen wie im Falle eines Lecks, beispielsweise in einer Leitung oder im Federspeicherzylinder, die Bremse automatisch angelegt, und nicht gelöst wird. Damit es dennoch möglich ist, im Falle eines Defekts das jeweilige Fahrzeug zu bewegen, verfügen entsprechende Parkbremssysteme üblicherweise über eine Notlöseeinrichtung, die unabhängig vom restlichen Parkbremssystem in der Lage ist, den Federspeicherzylinder mit Druckluft zu füllen, und somit die Feststellbremse zu lösen. Eine solche Notlöseeinrichtung verfügt üblicherweise, um gänzlich vom restlichen System abgekoppelt zu sein, über eine eigene Druckluftquelle und über eigene Druckluftleitungen, so dass ein relativ komplexes System ausschließlich als Sicherheit bzw. Redundanz fungiert und in der Praxis, außer zu Testzwecken, idealerweise gar nicht eingesetzt wird.

In der Praxis ist eine solche Funktionsweise beispielsweise mit Hilfe eines Select-High-Ventils leicht konstruierbar, das eingangsseitig an Notlöseeinrichtung und Parkbremseinrichtung angeschlossen ist, und ausgangsseitig in den Federspeicherzylinder mündet.

Aus der DE 10 2006 055 569 A1 geht eine Feststellbremsvorrichtung hervor, bei der zwei Druckmittelzuführleitungen über ein Wechselventil einem Federspeicherzylinder zuführbar sind. Dadurch ist es möglich, eine der beiden Druckluftzuleitungen als Redundanz zu benutzen, da die andere Leitung durch das Wechselventil im Falle eines Lecks automatisch abgesperrt werden würde.

Aus der DE 10 2008 027 731 A1 geht ein Steuergerät zur Steuerung einer Notlöseeinrichtung hervor, bei dem die Notlöseeinrichtung, ebenfalls über ein Wechselventil, oberhalb einer kritischen Geschwindigkeit das Auslösen der Feststellbremse verhindert. Auch hier ist die Funktion des Notlösesystems auf eine Sicherheitsfunktion reduziert.

Die DE 10 2009 037 636 A1 offenbart ein Steuergerät für eine elektrische Feststellbremse, welche ebenfalls eine Notlöseeinrichtung umfasst, wobei das Steuergerät geeignet ist, bei Detektion einer Druckdifferenz eine Fehlermeldung auszugeben.

Auch aus der EP 1 731 394 B1 geht eine Druckluftversorgungseinrichtung hervor, die vorzugsweise über eine Notlöseeinrichtung verfügt, die bei Bestromung eine Feststellbremse als Redundanz lösen kann.

Aus der EP 2 146 882 B1 geht eine Feststellbremseinrichtung und mehrere dazugehörige Verfahren hervor, bei denen eine Notlösefunktion ausschließlich zum Notlösen der Feststellbremse bei Ausfall eines ersten Feststellbremskreises vorgesehen ist. Nachteilhaft daran ist der relativ hohe bauliche Aufwand einer solchen Notlöseinrichtung, welche im Idealfall, ohne Fehlfunktionen des ersten Feststellbremskreises, überhaupt nicht genutzt wird.

Insbesondere bei Lastkraftwagen ist es darüber hinaus oft wünschenswert, eine sogenannte Stretch-Brake-Funktion bzw. Streckbremsfunktion zu implementieren. Eine solche Funktion sieht vor, dass der Truck bzw. das Zugfahrzeug ungebremst fährt, während der Anhänger gebremst wird. Dadurch wird ein sogenanntes jaccknifing verhindert, welches beim Abbremsen des Zugfahrzeugs auftreten kann, wobei der Anhänger dagegen aufläuft und sich seitlich wegklappt. Aus dem allgemein bekannten Stand der Technik gehen verschiedene, eigenständige Vorrichtungen hervor, um die Stretch-Brake-Funktion zu realisieren.

Aus der US 2010/0063702 A1 gehen eine Vorrichtung und ein Verfahren hervor, einen Lastkraftwagen wie beschrieben zu stabilisieren, bei dem die Bremsen des Zugfahrzeugs und des Anhängers getrennt angesteuert werden. Hierbei ist allerdings eine komplexe Sensorik vorgesehen die Informationen über verschiedene, den Fahrzustand betreffende Messgrößen aufnimmt. Auch die getrennte Ansteuerung von Zugfahrzeug und Anhänger erfordert ein jeweils eigenständiges, dafür vorgesehenes Bremssystem.

Aus der DE 3407 660 A1 geht eine Streckbremseinrichtung mit einem gesondert zu diesem Zweck vorgesehenen, manuell betätigbaren Ventilmechanismus hervor.

Die DE 10 2006 054 433 A1 zeigt eine äquivalente Lösung, bei der die Ansteuerung der Bremsen des Anhängers elektronisch, statt, wie oben beschrieben, pneumatisch erfolgt.

Die DE 10 2008 014 459 A1 beschreibt eine Bremsanlage für einen Fahrzeugzug, bei dem das Einbremsen des Zugfahrzeugs bei Betätigung eines elektrischen Bedienelements unterdrückbar ist, wodurch die Streckbremsfunktion realisiert wird. Auch hier wird die Streckbremsfunktion durch eigens dafür vorgesehene pneumatische Komponenten wie Druckluftleitungen und Absperrmagnetventile zum ausschließlichen Unterdrücken des Abbremsens realisiert.

Neben der Streckbremsfunktion werden auch andere Funktionen von Nutzfahrzeugen durch eigene, dafür vorgesehene Systeme realisiert.

Beispielsweise zeigt die DE 10 2008 007 709 A1 eine Bremsanordnung für ein Fahrzeug, bei der die Federspeicheraktuatoren verschiedener Achsen sich unabhängig voneinander anlegen und lösen lassen, so dass die Achsen relativ zueinander horizontal senkrecht zu ihrer Orientierung beweglich sind, was beispielsweise bei der Höhenverstellung, also Niveauregulierung des Fahrzeugs, wünschenswert ist.

Nachteilhaft an den zuvor genannten Vorrichtungen und Verfahren sind der reine Redundanzcharakter der Notlöseeinrichtung und die aufwendige Realisierung verschiedener Zusatzfunktionen. Die DE 10 2007 016 335 A1 offenbart ein gattungsgemäßes Verfahren, bei dem eine Notlöseeinrichtung unabhängig von einem etwaigen Notlösefall immer wieder testweise betätigt wird.

Es ist die Aufgabe der vorliegenden Erfindung, mit minimalen baulichen Aufwand ein Parkbremssystem und ein Verfahren zu dessen Betrieb zu schaffen, welches eine Vielzahl von Funktionen ausführt und welches die vorhandenen Komponenten möglichst effektiv nutzt.

Die Aufgabe wird gelöst durch ein Verfahren gemäß Anspruch 1 sowie durch ein Parkbremssystem gemäß Anspruch 3 und ein Nutzfahrzeug gemäß Anspruch 5. Die jeweils abhängigen Unteransprüche geben vorteilhafte Weiterbildungen der Erfindung wieder.

Die Erfindung schließt die technische Lehre ein, dass während Abwesenheit einer Fehlfunktion, wie beispielsweise eines Lecks, durch die Notlöseeinrichtung der Federspeicherzylinder mit Druckluft versorgt beziehungsweise befüllt wird.

Der Vorteil ist unter anderem darin zu sehen, dass die Funktion der Notlöseeinrichtung sich nicht nur auf Ausnahmefälle beschränkt, sondern auch im gewöhnlichen Betrieb genutzt werden kann. Zusätzlich zu den im Folgenden vorgestellten Spezialfällen ist ein grundlegender, unüblicher Vorteil darin zu sehen, dass ein Ausfall bzw. ein Defekt der Notlöseeinrichtung selbst als fall-back Zustand lediglich den Normalzustand wiederherstellt, in welchem jene während des Betriebs nicht genutzt wird.

Die Erfindung sieht vor, dass die Notlöseeinrichtung durch eine benutzerbedienbare Schnittstelle eingesteuert wird.

Dadurch ist es beispielsweise dem Fahrer möglich, selbst zu entscheiden, wann bestimmte Funktionen gewünscht sind. So ist beispielsweise eine automatisierte Aktivierung der Stretch-Brake-Funktion während der Fahrt oft nicht wünschenswert oder sogar gefährlich.

Eine bevorzugte Ausführungsform der Erfindung sieht vor, dass die Notlöseeinrichtung durch eine, einem Regelungssystem des Nutzfahrzeugs zugeordnete, Steuereinheit angesteuert wird.

Dadurch lässt sich vorteilhafterweise eine Vielzahl von Funktionen automatisch realisieren, bei der die Zustimmung des Fahrers vorausgesetzt werden kann. Die Ansteuerung kann dabei sowohl pneumatisch, also über Druckluftsignale, als auch elektrisch, also beispielsweise über einen digitalen Datenbus, oder über eine Kombination von beidem, geschehen.

Die Erfindung sieht vor, dass mittels der Schnittstelle durch einen Benutzer eine Stretch-Brake-Funktion ausgewählt wird, und durch die Parkbremseinrichtung ein Anhängersteuerventil zum Anlegen einer Betriebsbremse eines Anhängers und der Federspeicherzylinder zum Anlegen der zugeordneten Bremse angesteuert wird, und durch die Notlöseeinrichtung der Federspeicherzylinder befüllt wird, wodurch die zugeordnete Bremse gelöst wird.

Der Vorteil besteht hier vor allem darin, dass sich somit besonders einfach eine Stretch-Brake-Funktion realisieren lässt. Solange die Notlöseeinrichtung aktiv bleibt, bleibt der Federspeicherzylinder befüllt, und die zugeordneten Bremsen sind gelöst. Dann ist es dem Fahrer möglich, durch geregelte, also stufenlose oder abgestufte Kontrolle der Bremskraft der Betriebsbremsen des Anhängers über die Parkbremseinrichtung lediglich den Anhänger, nicht aber das Zugfahrzeug, abzubremsen. Die Schnittstelle kann dabei beispielsweise als berührungsempfindliches Display oder als Knopf oder als Schalter oder auf eine beliebige andere Art und Weise ausgebildet sein. Es ist darüber hinaus im Rahmen dieser Erfindung ebenfalls denkbar, diese Stretch-Brake-Funktion ohne vorherige Eingabe des Fahrers zu aktivieren.

Gemäß einer nicht beanspruchten Ausführungsform kann zusätzlich vorgesehen werden, dass, wenn durch die Parkbremseinrichtung der Federspeicherzylinder zum Anlegen der zugeordneten Bremse entleert wird, also die Parkbremse aktiviert wird, und gleichzeitig durch eine Betriebsbremseinrichtung die gleiche Bremse zusätzlich angelegt wird, zur Verwirklichung einer Anti-Compound-Funktion der Federspeicherzylinder simultan durch die Notlöseeinrichtung befüllt wird.

Hierbei wird insbesondere davon Gebrauch gemacht, dass der Federspeicherzylinder durch die Notlöseeinrichtung nicht nur gänzlich befüllt oder entleert werden kann, sondern graduell einen dazwischenliegenden Luftdruck erhalten kann.

Diese Ausführungsform ist insbesondere dann zweckmäßig, wenn ein Bremsaktuator durch einen Kombibremszylinder angetrieben wird, also sowohl durch die Federkraft einer Druckfeder eines Federspeicherzylinders als auch durch die luftdruckbeaufschlagte Membran eines Betriebsbremsenzylinders. Dabei kann es passieren, dass die Membran und die Druckfeder gleichzeitig ihre jeweils maximale gleichgerichtete Kraft auf den Bremsaktuator ausüben, und somit beispielsweise einen Bremsbelag oder eine Bremsscheibe oder eine andere damit zusammenhängende mechanische Komponente beschädigen. Daher ist eine sogenannte Anti-Compound-Funktion wünschenswert, bei welcher die maximal auftretende Kraft reduziert wird. Im vorgestellten Verfahren wird dies geschickt dadurch gelöst, dass die Notlöseeinrichtung idealerweise genau die Kraft zum Lösen der Bremse aufwendet, die durch die Betriebsbremseinrichtung ausgeübt wird. Als Resultat bleibt das Fahrzeug gebremst, ohne dass dabei schädigende Kräfte auftreten.

Gemäß einer nicht beanspruchten Ausführungsform kann zusätzlich vorgesehen werden, dass eine Niveauregulierung aktiviert wird, und durch die Notlöseeinrichtung der Federspeicherbremszylinder befüllt wird, wodurch die zugeordnete Bremse, die auf eine von mindestens zwei vorhandenen Achsen wirkt, zur Ermöglichung einer Relativbewegung der beiden Achsen zueinander gelöst wird.

Der Vorteil besteht hierbei darin, dass für die Dauer der Befüllung durch die Notlöseeinrichtung eine Höhenverstellung des jeweiligen Fahrzeugteils temporär ermöglicht wird, ohne dass das Fahrzeug insgesamt wegrollen kann. Darüber hinaus würde bei einem auftretenden Defekt die gelöste Bremse wieder automatisch angelegt werden. Ebenfalls ist mittels dieser Variante erreichbar, dass die Feststellbremsen aller Achsen gelöst werden.

Gemäß einer nicht beanspruchten Ausführungsform kann zusätzlich vorgesehen werden, dass eine autonome, fahrerlose Fahrzeugsteuerung aktiviert wird, und durch die Notlöseeinrichtung der Federspeicherzylinder befüllt wird, und die zugeordnete Bremse gelöst wird.

Der Vorteil besteht hierbei vor allem darin, dass somit beispielsweise automatisiertes Einparken oder Umparken vereinfacht bzw. ermöglicht wird. Dabei würde ein Defekt der Notlöseeinrichtung oder der autonomen Fahrzeugsteuerung wieder als fall-back Sicherheitsfunktion dienen. In diesem Fall würde das Fahrzeug festgesetzt und ein Wegrollen unmöglich gemacht werden, da die primäre Parkbremseinrichtung weiterhin den Federspeicherzylinder so ansteuert, dass dieser entleert wird.

Die Erfindung sieht außerdem ein Parkbremssystem vor, bei welchem die Notlöseeinrichtung durch mindestens eine Steuereinheit elektrisch oder pneumatisch ansteuerbar ist, die dazu ausgebildet ist, während Abwesenheit einer den Federspeicherzylinder betreffenden Fehlfunktion des Parkbremssystems ein wie beanspruchtes Verfahren auszuführen.

Die geeignete Ausbildung der Steuereinheit kann dabei sowohl pneumatisch als auch elektrisch, insbesondere durch auf einer elektronischen Speichereinheit hinterlegte Rechenanweisungen, realisiert sein.

Die Steuereinheit kann dabei vorzugsweise zur Parkbremseinrichtung, zum Betriebsbremssystem, zum Niveauregulierungssystem oder zu einem autonomen Fahrsystem zugehören, oder Teil einer benutzerbedienbaren Schnittstelle sein. Vor allem im Fall einer solchen Schnittstelle ist eine elektronische Kommunikation mit der Notlöseeinrichtung besonders bevorzugt.

Weitere die Erfindung verbessernde Maßnahmen werden nachstehend gemeinsam mit der Beschreibung von vier Ausführungsbeispielen der Erfindung anhand jeweils einer Figur näher dargestellt. Es zeigen in Form von schematischen Darstellungen:
- Figur 1: ein Parkbremssystem mit pneumatischer Ansteuerung,
- Figur 2: ein Parkbremssystem mit gemeinsamen Datenbus,
- Figur 3: ein Parkbremssystem mit pneumatischer und elektronischer Ansteuerung, und
- Figur 4: ein Parkbremssystem mit einer gemeinsamen Steuereinheit.

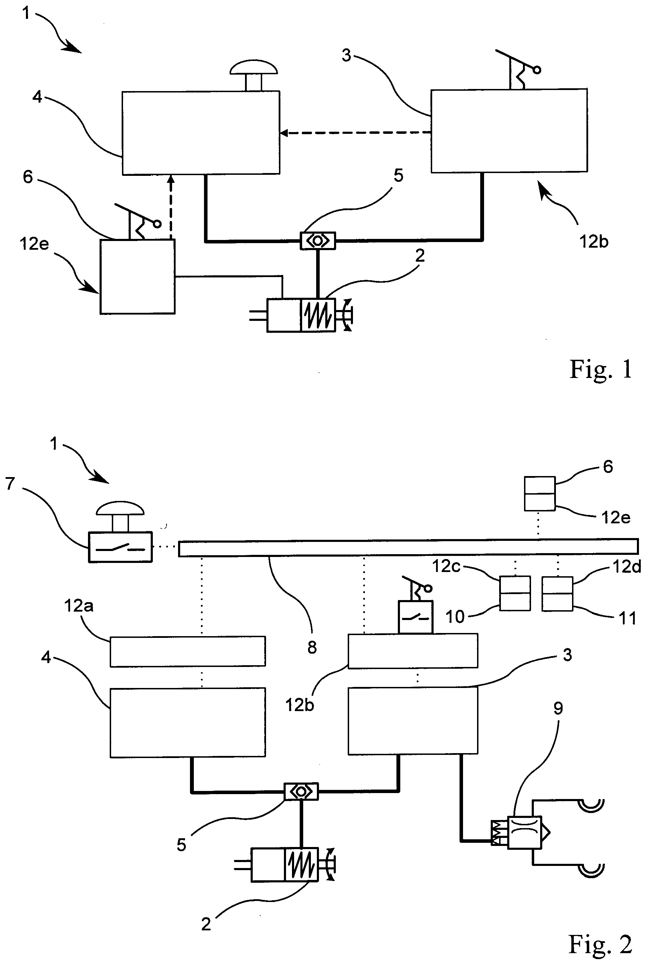

Figur 1 zeigt den Aufbau eines druckluftbetriebenen Parkbremssystem 1 eines hier nicht weiter dargestellten Nutzfahrzeuges, umfassend einen Federspeicherzylinder 2 zum Anlegen einer hier nicht im Detail dargestellten Bremse durch Federkraft und zum Lösen der gleichen Bremse durch entgegengerichtete Luftdruckkraft, sowie eine Parkbremseinrichtung 3 zur Befüllung und Entleerung des Federspeicherzylinders 2, um die zugeordnete Bremse regelbar, also abgestuft oder stufenlos einstellbar, zu lösen und anzulegen. Desweiteren verfügt das Parkbremssystem über eine Notlöseeinrichtung 4 zur Befüllung des Federspeicherzylinders 2 während einer diesem Federspeicherzylinder 2 betreffenden Fehlfunktion des Parkbremssystems 1. Die Notlöseeinrichtung 4 und die Parkbremseinrichtung 3 sind dabei über ein Wechselventil 5 mit dem Federspeicherzylinder 2 verbunden, wobei idealerweise die Druckluftleitung zwischen dem Wechselventil 5 und dem Federspeicherzylinder 2 möglichst kurz gehalten wird oder ganz darauf verzichtet wird, wobei das Wechselventil 5 also unmittelbar an dem Federspeicherzylinder 2 angebracht ist. Desweiteren führt auch eine Druckluftleitung eines Betriebsbremssystems 6 zu dem Federspeicherzylinder 2, welcher Teil eines Kombibremszylinders ist.

Wird nun der Federspeicherzylinder 2 zum Anlegen der zugeordneten Bremse in Parkstellung entleert, und wird gleichzeitig zusätzlich durch die Betriebsbremseinrichtung 6 die gleiche Bremse angelegt, so kann zur Verwirklichung einer Anti-Compound-Funktion der Federspeicherzylinder 2 simultan durch die Notlöseeinrichtung 4 zum Ausgleich des durch die Betriebsbremseinrichtung 6 ausgeübten Druckes mit Druckluft befüllt.

Dabei fungieren Parkbremseinrichtung 3 und Betriebsbremseinrichtung 6 jeweils als pneumatische Steuereinheiten 12b, 12e, die die Notlöseeinrichtung 4 in diesem Ausführungsbeispiel pneumatisch ansteuern, damit diese den Federzylinderspeicher 2 füllt. Die pneumatische Ansteuerung ist hier durch gestrichelte Pfeile symbolisiert.

Figur 2 zeigt das Schema eines Parkbremssystems 1, bei dem die Steuereinheit 12a der Notlöseeinrichtung 4 über einen Datenbus 8 durch eine benutzerbedienbare Schnittstelle 7 mit nicht dargestellter elektronsicher Steuereinheit, eine Steuereinheit 12b der Parkbremseinheit 3, eine Steuereinheit 12c eines Niveauregulierungssystems 10, eine Steuereinheit 12e der Betriebsbremseinrichtung 6 und eine Steuereinheit 12d eines autonomen Fahrsystems 11 angesteuert wird. Die genannten Steuereinheiten wirken hier elektronisch beziehungsweise digital.

Somit wird ein Verfahren zur erfindungsgemäßen Verwirklichung einer Stretch-Brake-Funktion ermöglicht. Wie im vorherigen Ausführungsbeispiel ist der Federspeicherzylinder 2 sowohl durch die Parkbremseinrichtung 3 als auch durch die Notlöseeinrichtung 4, jeweils über ein Wechselventil 5, mit Druckluft befüllbar, um die zugeordnete Bremse zu lösen. Über die Schnittstelle 7 kann nun eine Stretch-Brake-Funktion ausgewählt werden. Die entsprechende Information wird über den Datenbus 8 des Nutzfahrzeugs, beispielsweise ein CAN-Bus, an die Notlöseeinrichtung 4 vermittelt. Dies bewirkt, dass unabhängig von der Parkbremseinrichtung 3 der Federspeicherzylinder 2 mit Druckluft befüllt wird und somit die Feststellbremse des Zugfahrzeugs gelöst bleibt. Über die Parkbremseinrichtung 3 kann nun geregelt das Anhängersteuerventil 9 angesteuert werden, wodurch die nicht weiter dargestellten Betriebsbremsen des Anhängers kontrolliert angezogen werden. Ebenfalls wäre denkbar, dass statt einer Aktivierung über die benutzerbedienbare Schnittstelle 7 die Stretch-Brake-Funktion durch Interpretation verschiedener Parameter wie Neigung des Geländes und/oder Geschwindigkeit des Fahrzeugs eingeleitet wird.

Unabhängig von der Stretch-Brake-Funktion ist mittels Ansteuerung der Notlöseeinrichtung 4 durch die Steuereinheit 12c des Niveauregulierungssystems 10 ein hier nicht beanspruchtes Verfahren durchführbar, bei dem die dem Federspeicherzylinder 2 zugeordnete Bremse zeitweise gelöst wird, um eine Veränderung des Abstands verschiedener Achsen des Nutzfahrzeugs zueinander zu ermöglichen.

Ebenso kann durch die Steuereinheit 12d des autonomen Fahrsystems 11 die Notlöseeinrichtung 4 angesteuert werden, um während einer autonomen, fahrerlosen Fahrt die dem Feststellbremszylinder 2 zugeordneten Bremsen zeitweise und mit sicherem fall-back Zustand zu lösen.

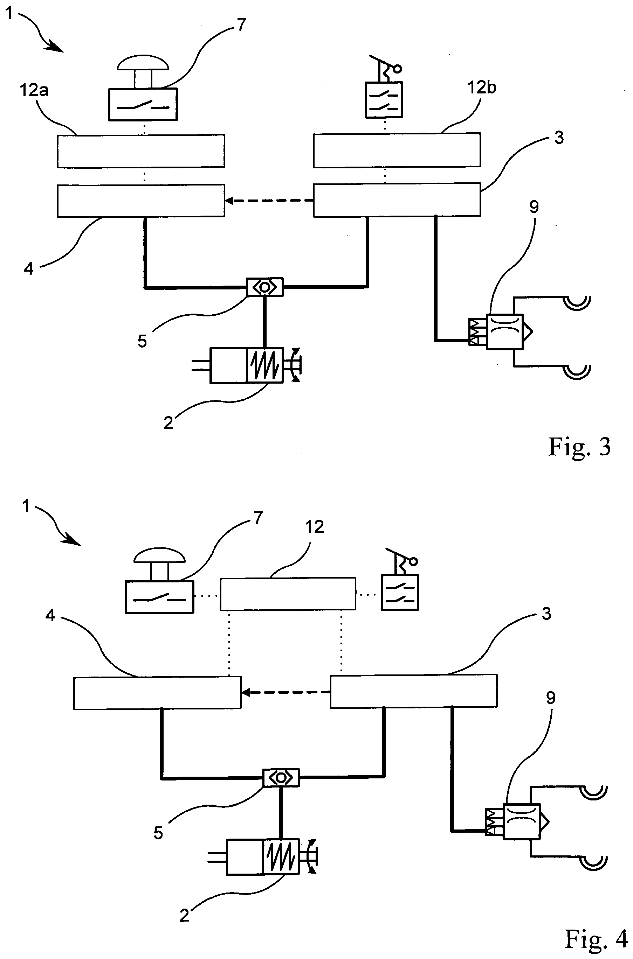

Wie in Figur 3 dargestellt, ist ebenfalls möglich, dass die Notlöseeinrichtung 4 auch dann pneumatisch (gestrichelter Pfeil) durch eine Steuereinheit, hier in Form der Parkbremseinheit 3, angesteuert werden kann, wenn diese über eine elektrisch wirkende (gepunktete Linien) Steuereinheit 12b verfügt.

Gemäß Figur 4 ist auch möglich, dass die Parkbremseinrichtung 3 und die Notlöseeinrichtung 4 über eine gemeinsame Steuereinheit 12 verfügen. Auch dann ist möglich, dass zwischen Parkbremseinrichtung 3 und Notlöseeinrichtung 4 pneumatisch (gestrichelter Pfeil) kommuniziert wird, beispielsweise zur Einleitung einer Stretch-Brake-Funktion oder Anti-Compound-Funktion.

Es ist beispielsweise auch möglich, dass mehrere Federspeicherzylinder vorgesehen sind.

### Bezugszeichenliste

- 1: Parkbremssystem
- 2: Federspeicherzylinder
- 3: Parkbremseinrichtung
- 4: Notlöseeinrichtung
- 5: Wechselventil
- 6: Betriebsbremseinrichtung
- 7: Schnittstelle
- 8: Datenbus
- 9: Anhängersteuerventil
- 10: Niveauregulierungssystem
- 11: autonomes Fahrsystem
- 12, 12a - 12e: Steuereinheit

## Patentansprüche

1. Verfahren zum Betrieb eines druckluftbetriebenen Parkbremssystems (1) eines Nutzfahrzeugs, mit einer Parkbremseinrichtung (3), mittels derer Druckluft in einen Federspeicherzylinder (2) eingespeist und dieser entlüftet wird, wodurch eine zugeordnete Bremse regelbar gelöst und angelegt wird, sowie mit einer Notlöseeinrichtung (4) zur Drucklufteinspeisung in den Federspeicherzylinder (2) während einer Fehlfunktion der Parkbremseinrichtung (3), wobei mittels der Notlöseeinrichtung (4) während Abwesenheit einer solchen Fehlfunktion Druckluft in den Federspeicherzylinder (2) eingespeist wird,
**dadurch gekennzeichnet, dass**
die Notlöseeinrichtung (4) durch eine benutzerbedienbare Schnittstelle (7) angesteuert wird,
wobei mittels der Schnittstelle (7) durch einen Benutzer eine Stretch-Brake-Funktion ausgewählt wird, und durch die Parkbremseinrichtung (3) ein Anhängersteuerventil (9) zum Anlegen einer Betriebsbremse eines Anhängers und der Federspeicherzylinder (2) zum Anlegen der zugeordneten Bremse angesteuert wird, und durch die Notlöseeinrichtung (4) Druckluft in den Federspeicherzylinder (2) eingespeist wird, wodurch die zugeordnete Bremse gelöst wird.

2. Verfahren nach einem der vorherigen Ansprüche,
wobei die Notlöseeinrichtung (4) durch eine, einem Regelungssystem des Nutzfahrzeugs zugeordnete, Steuereinheit (12; 12a - 12e) angesteuert wird.

3. Parkbremssystem (1) eines Nutzfahrzeugs, umfassend
- einen Federspeicherzylinder (2) zum Anlegen einer Bremse durch Federkraft und zum Lösen der Bremse durch entgegengerichtete Luftdruckkraft,
- eine Parkbremseinrichtung (3) zur Drucklufteinspeisung in den Federspeicherzylinder (2) und Entleerung des Federspeicherzylinders (2), um die zugeordnete Bremse regelbar zu lösen und anzulegen,
- eine Notlöseeinrichtung (4) zur Drucklufteinspeisung in den Federspeicherzylinder (2) während einer Fehlfunktion der Parkbremseinrichtung (3),
**dadurch gekennzeichnet, dass** die Notlöseeinrichtung (4) durch mindestens eine Steuereinheit (12; 12a - 12e) elektrisch und / oder pneumatisch ansteuerbar ist, die dazu ausgebildet ist, während Abwesenheit einer solchen Fehlfunktion ein Verfahren nach einem der Ansprüche 1 bis 2 auszuführen.

4. Parkbremssystem (1) nach Anspruch 3,
**dadurch gekennzeichnet, dass** die Steuereinheit (12; 12a - 12e) einem Fahrzeugsystem aus einer Gruppe von Fahrzeugsystemen zugeordnet ist, welche die Parkbremseinrichtung (3), eine benutzerbedienbare Schnittstelle (7), eine Betriebsbremseinrichtung (6), ein Niveauregulierungssystem (10) und ein autonomes Fahrsystem (11) des Kraftfahrzeugs umfasst.

5. Nutzfahrzeug mit einem Parkbremssystem (1) nach einem der Ansprüche 3 oder 4.

## Claims

1. Method for operating a compressed air-operated parking brake system (1) of a commercial vehicle, comprising a parking brake device (3), by means of which compressed air is fed into a spring brake cylinder (2) and this is evacuated, whereby an assigned brake is controllably released and applied, and with an emergency release device (4) for feeding compressed air into the spring brake cylinder (2) during a malfunction of the parking brake device (3), wherein by means of the emergency release device (4), compressed air is fed into the spring brake cylinder (2) during the absence of such a malfunction,
**characterised in that**
the emergency release device (4) is actuated by a user-controllable interface (7), wherein by means of the interface (7), a stretch brake function is selected by a user, and a trailer control valve (9) is actuated by the parking brake device (3) to apply a service brake of a trailer and the spring brake cylinder (2) is actuated to apply the assigned brake, and compressed air is fed into the spring brake cylinder (2) by the emergency release device (4), whereby the assigned brake is released.

2. Method according to any of the preceding claims,
wherein the emergency release device (4) is actuated by a control unit (12; 12a - 12e) assigned to a regulation system of the commercial vehicle.

3. Parking brake system (1) of a commercial vehicle, comprising
- a spring brake cylinder (2) for applying a brake by spring force and for releasing the brake by the force of air pressure in the opposite direction,
- a parking brake device (3) for feeding compressed air into the spring brake cylinder (2) and evacuating the spring brake cylinder (2) in order to release and apply the assigned brake controllably,
- an emergency release device (4) for feeding compressed air into the spring brake cylinder (2) during a malfunction of the parking brake device (3),
**characterised in that** the emergency release device (4) can be actuated electrically and/or pneumatically by at least one control unit (12; 12a - 12e) which is configured, during the absence of such a malfunction, to perform a method according to any of claims 1 to 7.

4. Parking brake system (1) according to claim 8,
**characterised in that** the control unit (12; 12a - 12e) is assigned to a vehicle system of a group of vehicle systems which comprises the parking brake device (3), a user-controllable interface (7), a service brake device (6), a level control system (10) and an autonomous driving system (11) of the motor vehicle.

5. Commercial vehicle with a parking brake system (1) according to claim 3 or 4.

## Revendications

1. Procédé pour faire fonctionner un système (1) de frein de stationnement fonctionnant à l'air comprimé d'un véhicule utilitaire, comprenant un dispositif (3) de frein de stationnement, au moyen duquel de l'air comprimé est introduit dans un cylindre (2) à ressort accumulateur et en est purgé, grâce à quoi un frein associé peut être desserré et appliqué de manière réglable, ainsi que comprenant un dispositif (4) de desserrage d'urgence pour introduire l'air comprimé dans le cylindre (2) à ressort accumulateur pendant un fonctionnement défectueux du dispositif (3) de frein de stationnement, dans lequel au moyen du dispositif (4) de desserrage d'urgence, on introduit, en l'absence d'un fonctionnement défectueux de ce genre, de l'air comprimé dans le cylindre (2) à ressort accumulateur.
caractérisé en ce
on commande le dispositif (4) de desserrage d'urgence par une interface (7) pouvant être commandée par un utilisateur,
dans lequel, au moyen de l'interface (7), il est choisi par un utilisateur une fonction stretch-brake et, par le dispositif (3) de frein de stationnement, une vanne (9) de commande de remorque est commandée pour appliquer un frein de service d'une remorque et le cylindre (2) à ressort accumulateur est commandé pour appliquer le frein associé et, par le dispositif (4) de desserrage d'urgence, de l'air comprimé est introduit dans le cylindre (2) à ressort accumulateur, grâce à quoi le frein associé est desserré.

2. Procédé suivant l'une des revendications précédentes,
dans lequel on commande le dispositif (4) de desserrage d'urgence par une unité (12; 12a à 12e) de commande associée à un système de régulation du véhicule utilitaire.

3. Système (1) de frein de stationnement d'un véhicule utilitaire, comprenant
- un cylindre (2) à ressort accumulateur pour appliquer un frein par une force de ressort et pour desserrer le frein par une force d'air comprimé antagoniste,
- un dispositif (3) de frein de stationnement pour introduire de l'air comprimé dans le cylindre (2) à ressort accumulateur et pour purger le cylindre (2) à ressort accumulateur, afin de desserrer et d'appliquer de manière réglable le frein associé,
- un dispositif (4) de desserrage d'urgence pour introduire de l'air comprimé dans le cylindre (2) à ressort accumulateur pendant un fonctionnement défectueux du dispositif (3) de frein de stationnement,
**caractérisé en ce que** le dispositif (4) de desserrage d'urgence peut être commandé électriquement et/ou pneumatiquement par au moins une unité (12; 12a à 12e) de commande, constituée pour effectuer, en l'absence d'un fonctionnement défectueux de ce genre, un procédé suivant l'une des revendications 1 à 2.

4. Système (1) de frein de stationnement suivant la revendication 3,
**caractérisé en ce que** l'unité (12; 12a à 12e) de commande est associée à un système de véhicule choisi dans un groupe de systèmes de véhicule, qui comprend le dispositif (3) de frein de stationnement, une interface (7) pouvant être commandée par un utilisateur, un dispositif (6) de frein de service, un système (10) de régulation de niveau et un système (11) autonome de conduite du véhicule automobile.

5. Véhicule utilitaire comprenant un système (1) de frein de stationnement suivant l'une des revendications 3 ou 4.
